Europäisches Patentamt

European Patent Office

Office européen des brevets

(19)

(11) Numéro de publication: **0 264 320 B1**

# FASCICULE DE BREVET EUROPEEN

(45) Date de publication de fascicule du brevet:
28.08.91

(51) Int. Cl.⁵: **G10K 11/00, G01S 3/80**

(21) Numéro de dépôt: **87402148.8**

(22) Date de dépôt: **25.09.87**

Jointe à la demande no. 87906432.7/0324769
(numéro de dépôt/numéro de publication de la
demande européenne) par décision du 04.01.91.

(54) **Sonar cylindrique déployable.**

(30) Priorité: **26.09.86 FR 8613485**

(43) Date de publication de la demande:
**20.04.88 Bulletin 88/16**

(45) Mention de la délivrance du brevet:
**28.08.91 Bulletin 91/35**

(84) Etats contractants désignés:
**DE ES GB IT NL**

(56) Documents cités:
| | |
|---|---|
| **EP-A- 0 232 071** | **AU-A- 409 960** |
| **DE-C- 702 103** | **GB-A- 2 093 996** |
| **US-A- 3 665 380** | **US-A- 3 886 491** |
| **US-A- 3 931 607** | |

(73) Titulaire: **THOMSON-CSF**
**51, Esplanade du Général de Gaulle**
**F-92800 Puteaux(FR)**

(72) Inventeur: **Lemer, Alain**
**THOMSON-CSF SCPI 19, avenue de Messine**
**F-75008 Paris(FR)**
Inventeur: **Riccardi, Guy**
**THOMSON-CSF SCPI 19, avenue de Messine**
**F-75008 Paris(FR)**

(74) Mandataire: **Desperrier, Jean-Louis et al**
**THOMSON-CSF SCPI**
**F-92045 PARIS LA DEFENSE CEDEX 67(FR)**

## Description

La présente invention se rapporte aux sonars cylindriques déployables qui peuvent être utilisés par exemple à partir d'un hélicoptère.

Il est connu du brevet français 2 354 920 de réaliser une bouée acoustique comportant sur un corps un ensemble de bras déployables munis d'hydrophones. Lorsque la bouée est larguée les bras sont repliés contre le corps, ce qui facilite sa pénétration dans l'eau et évite d'arracher ces bras. Lorsqu'elle est stabilisée dans l'eau à la profondeur voulue, les bras se déplient pour donner une base d'écoute cylindrique de diamètre nettement plus large que le corps de la bouée.

Il est également connu du brevet GB-A-2 093 996 une bouée sonar du même type comprenant sur chaque bras déployable cinq colonnes d'hydrophones séparées d'une distance λ/2 pour augmenter la sensibilité en réception. Cet espacement ne procure pas de caractéristique de directivité particulière.

Le traitement électronique des signaux reçus par les hydrophones de chaque bras permet de localiser les sources de bruit, par exemple les sous-marins. Toutefois une telle disposition cylindrique, nécessairement transparente du fait de la structure du dispositif, est à l'origine d'un certain nombres d'inconvénients, en particulier des ambiguïtés en détection et en localisation provenant des lobes secondaires et du lobe arrière des différents hydrophones.

Pour pallier ces inconvénients, l'invention propose un sonar conforme à la revendication 1.

D'autres particularités et avantages de l'invention apparaîtront clairement dans la description suivante présentée à titre d'exemple non limitatif en regard des figures annexées qui représentent :
- la figure 1, une vue en perspective d'un sonar selon l'invention;
- la figure 2, un diagramme de positionnement des colonnes 4 et 7 de la figure 1;
- la figure 3, un schéma de circuit électronique des signaux provenant de ces colonnes.

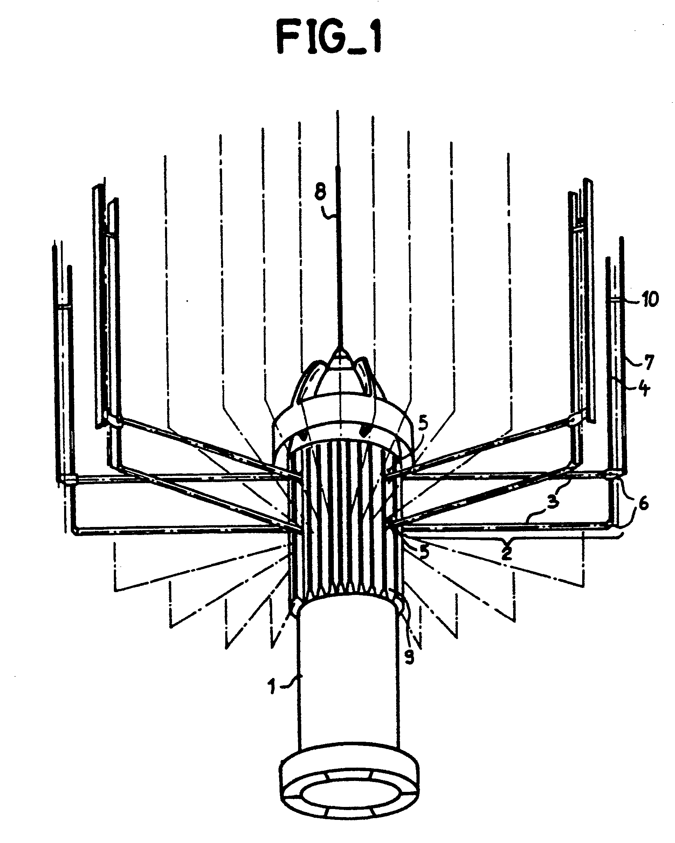

Dans le mode de réalisation représenté sur la figure 1, le sonar comprend un corps 1 maintenu en position verticale au bout d'un câble 8 qui permet par exemple de le descendre depuis un hélicoptère jusque dans l'eau. Autour de ce corps sont disposés un ensemble de bras repliables 2 qui viennent se loger en position repliée dans un ensemble de logements 9 situés longitudinalement le long des génératrices du corps 1. Chaque bras 2 comprend deux tiges 3 fixées à une extrémité par deux articulations 5 sur le corps 1. Un premier barreau vertical 4 est fixé à l'autre extrémité des tiges 3 par des articulations 66 de manière à former avec les tiges 3 un parallélogramme déformable situé dans le plan vertical passant par l'axe de symétrie de la bouée et tel qu'il peut se replier contre le corps et se déplier jusqu'à une position où les tiges 3 sont horizontales et le barreau 4 vertical. L'une des tiges 3 au moins s'étend au-delà de l'articulation 6 pour maintenir un deuxième barreau 7 semblable au barreau 4. Afin de maintenir ce barreau 7 parallèle au barreau 4, on utilise par exemple une entretoise 10 articulée sur ces deux barreaux et située vers l'extrémité de ceux-ci opposée aux articulations 6.

Lorsque les bras 2 sont dépliés, les barreaux 4 et 7 de ces bras sont disposés sur deux couronnes cylindriques verticales coaxiales au corps 1.

En munissant alors les barreaux verticaux de transducteurs, on constitue ainsi une antenne sonar circulaire transparente formée de colonnes de transducteurs puisqu'il n'y a pas d'obstacle aux ondes sonores entre les colonnes.

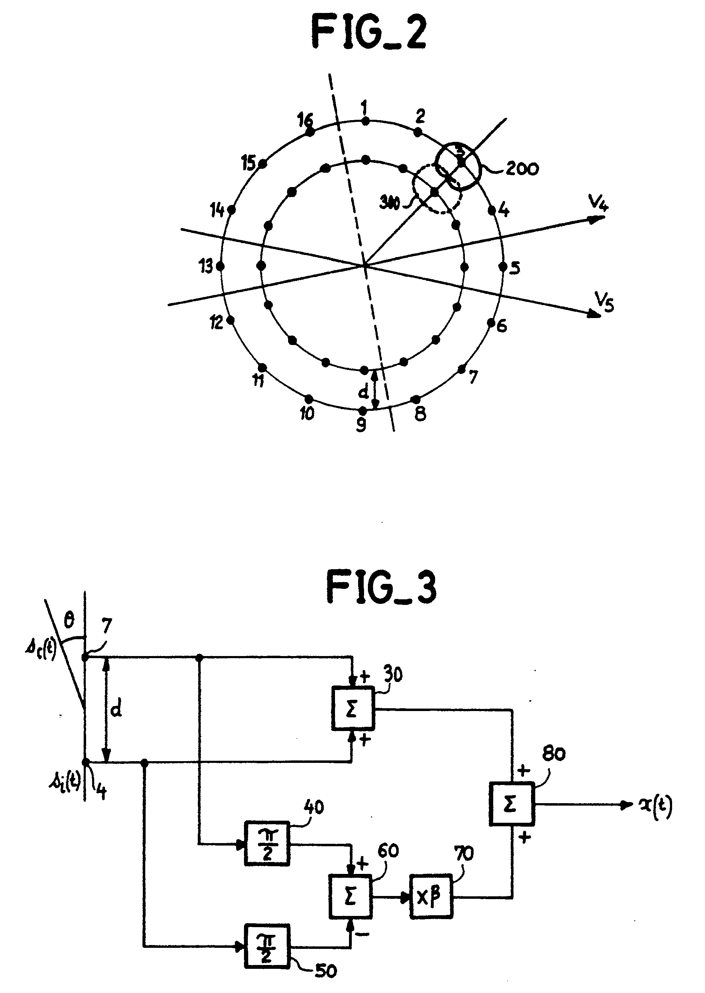

Dans un plan horizontal les barreaux sont regroupés selon deux cercles concentriques comme représenté sur la figure 2 dans le cas de 16 bras.

Il est connu de traiter les signaux provenant des transducteurs par des moyens électroniques, contenus par exemple dans le corps 1, pour obtenir dans le plan horizontal des directions privilégiées, appelées voies, d'émission ou de réception. Sur la figure 2 on a par exemple représenté les direction des voies $V_4$ et $V_5$.

Selon l'invention, on traite également par des moyens électroniques les signaux des deux colonnes de transducteurs de chaque bras pour obtenir pour chacune de ces paires de colonnes un diagramme en forme de cardioïde dans le plan horizontal. Cette cardioïde peut être selon le cas orientée vers l'extérieur du cercle comme la cardioïde 200 en traits pleins, ou vers l'intérieur du cercle comme la cardioïde 300 en traits pointillés. On obtient ainsi pour chacune des paires de colonnes l'équivalent électronique d'une antenne élémentaire dite bafflée dans un sens ou dans l'autre, c'est-à-dire d'une antenne placée devant un écran qui fait obstacle à la réception par l'arrière et donne cette directivité en cardioïde.

Le traitement électronique utilisé pour obtenir cette directivité en forme de cardioïde peut être obtenu par exemple à l'aide du circuit représenté sur la figure 3.

Si les deux colonnes d'un même bras sont séparées d'une distance d, le signal reçu dans la direction θ par rapport à l'alignement de ces deux colonnes sera $s_c(t)$ pour la colonne 7 et $s_i(t)$ pour la colonne 4.

Les deux signaux $s_c(t)$ et $s_i(t)$ sont additionnés dans un premier additionneur 30. Ils sont déphasés de

$\frac{\pi}{2}$ dans deux déphaseurs 40 et 50, et les signaux ainsi déphasés sont soustraits dans un deuxième additionneur 60. Le signal de l'additionneur 60 est multiplié par un coefficient $\beta$ dans un multiplicateur 70 puis le signal obtenu est additionné dans un additionneur 80 au signal provenant de l'additionneur 30.

Si A cos $\omega$t est le signal reçu, le signal x(t) résultant délivré par l'additionneur 80 est égal à :

$$x(t) = 2 A \cos \omega t \left[ \cos \left( \frac{\pi d}{\lambda} \cos \theta \right) + \beta \sin \left( \frac{\pi d}{\lambda} \cos \theta \right) \right]$$

avec $\lambda$ = longueur d'onde de fonctionnement du sonar, $\beta$ = cotg $\left(\frac{\pi d}{\lambda}\right)$ pour la cardioïde extérieure (200) et $\beta$ = - cotg $\left(\frac{\pi d}{\lambda}\right)$ pour la cardioïde intérieure (300 ).

Si d est petit devant $\lambda$, et tout au moins inférieur à $\lambda$/4, la formule se réduit à :

x(t) = 2A cos $\omega$t (1 + cos $\theta$)

On constate donc que plus d est petit, plus on se rapproche de la forme d'une cardioïde. On est toutefois limité par la sensibilité aux dispersions sur les caractérisques des transducteurs, qui augmente avec la valeur du coefficient $\beta$.

Il est connu de former une voie pointée dans une direction donnée en retardant (ou déphasant) les signaux des capteurs d'une antenne d'une valeur correspondant à la remise en phase des signaux suivant cette direction, puis en les sommant.

En associant alors de manière convenable les signaux ainsi traités pour toutes les paires de colonnes, on obtient l'équivalent de deux antennes bafflées demi-cylindriques orientées selon la voie désirée, l'une étant concave et l'autre convexe, ce qui atténue considérablement les inconvénients dus à la transparence de la structure de l'antenne en réduisant fortement le niveau du signal reçu sur l'arrière.

Pour cela selon l'invention on forme chaque voie en sommant les signaux des hydrophones de chaque colonne fournissant les deux signaux $s_i$(t) et $s_e$(t), puis en prenant les signaux correspondant aux cardioïdes orientées vers l'extérieur ( + $\beta$) pour toutes les paires de colonnes situées du même côté par rapport à un diamètre perpendiculaire à la direction de la voie, c'est-a-dire une moitié dans l'exemple décrit, et en prenant les signaux correspondant aux cardioïdes orientées vers l'intérieur (-$\beta$) pour l'autre moitié.

Ceci est obtenu simplement au moyen d'un dispositif de sélection au niveau du circuit 70.

A titre d'exemple, sur la figure 2 pour obtenir la voie $V_4$ on utilise les cardioïdes extérieures pour les bras 1 à 8 et les cardioïdes intérieures pour les bras 9 à 16. De même, pour la voie $V_5$ on utilise les cardioïdes extérieures pour les bras 2 à 9 et les cardioïdes intérieures pour les bras 10 à 1.

En ce qui concerne la directivité en site du sonar, qui est liée à la dimension en longueur des colonnes 4 et 7, on peut l'améliorer sensiblement en pondérant de manière connue la répartition spatiale des transducteurs élémentaires à l'intérieur de chacune des colonnes. De manière également connue on peut remplacer cette pondération spatiale par une pondération électronique des transducteurs qui sont alors régulièrement espacés dans le barreau.

A titre d'exemple de réalisation numérique, pour un sonar fonctionnant à 3, 5 Khz on peut utiliser un diamètre moyen des deux couronnes de colonnes de 1m avec un espacement d entre ces couronnes de 7cm, nettement inférieur à $\lambda$/4,et une hauteur des colonnes de 60cm.

L'invention n'est pas limitée au cas où les colonnes sont situées selon une couronne formant un cylindre à base circulaire puisque, de manière connue, la formation de voies peut se faire par des moyens électroniques pour des colonnes disposées sur des cylindres dont les bases forment toutes sortes de courbes telles que des ellipses ou des polygones divers. De même le sonar peut être accroché, outre à un hélicoptère, à un bâtiment de surface, ou même former une bouée acoustique éventuellement récupérable.

**Revendications**

1. Sonar cylindrique déployable, du type comprenant un corps cylindrique (1), un ensemble de bras (2) articulés sur le corps et portant chacun un ensemble de colonnes (4, 7) de transducteurs, les bras pouvant se replier contre le corps et se déployer en plaçant les colonnes parallèlement entre elles sur les génératrices d'un ensemble de surfaces cylindriques virtuelles, et des moyens de traitement des signaux des hydrophones pour former au moins une voie ($V_4$) d'émission et/ou de réception, caractérisé en ce que les bras (2) portent chacun deux colonnes (4,7) séparées par une distance inférieure au quart de la longueur d'onde de fonctionnement du sonar, que les moyens de traitement comprennent en outre des moyens pour donner à chaque paire de colonnes de chaque bras une directivité en réception et/ou en émission sensiblement cardioïde orientée vers l'intérieur (200) ou vers

3

l'extérieur (300), et qu'ils comprennent également des moyens pour sélectionner au niveau de la formation de voies une partie des paires de colonnes doubles dont les cardioïdes sont orientées vers l'intérieur et l'autre partie des paires de colonnes doubles dont les cardioïdes sont orientées vers l'extérieur en simulant ainsi deux antennes, l'une concave l'autre convexe, orientées dans la direction de chaque voie formée, toutes les paires de colonnes étant utilisées pour former chaque voie.

2. Sonar selon la revendication 1, caractérisé en ce que les colonnes (4, 7) sont régulièrement réparties en position déployée sur deux surfaces cylindriques à bases circulaires coaxiales et que les moyens de traitement sélectionnent pour chaque voie formée respectivement les cardioïdes situées d'un côté d'un plan diamétral du cylindre perpendiculaire à la direction de la voie (V₄) et les cardioïdes situés de l'autre côté de ce plan diamétral.

## Claims

1. A deployable cylindrical sonar array comprising a cylindrical body (1), a set of arms (2) hinged to the body and each bearing a group of transducer columns (4, 7), the arms being susceptible to be applied against the body or to be deployed by placing the columns parallelly with one another along generatrix lines of a plurality of virtual cylindrical surfaces, and means for processing the hydrophone signals in order to generate at least one transmission and/or reception channel (v₄), characterized in that each arm (2) bears two columns (4, 7) which are separated by a distance shorter than a quarter wavelength at the sonar operating frequency, that the processing means further comprise means for giving to each couple of columns of each arm a reception and/or transmission directivity having substantially the shape of a cardioide facing inwardly (200) or outwardly (300), and that these means further comprise means for selecting, at the level of the channel generation, one part of the couples of double columns whose cardioides face inwardly and the other part of the couples of double columns whose cardioides face outwardly, thus creating by simulation two antennas, a concave one and a convex one, both aligned in the direction of each generated channel, wherein all the column couples are used for generating each channel.

2. A sonar array according to claim 1, characterized in that the columns (4, 7) are regularly distributed when in the deployed position, on two cylindrical surfaces having coaxial basic circles, and that the processing means select for each generated channel the cardioides situated on one side of a diametral cylinder plane perpendicular to the direction of the channel (V₄), and the cardioides situated on the other side of this diametral plane respectively.

## Patentansprüche

1. Entfaltbare zylindrische Sonaranordnung bestehend aus einem zylindrischen Körper (1), einer Anzahl von am Körper angelenkten Armen (2), die je eine Gruppe von Transduktorsäulen (4, 7) tragen, wobei die Arme gegen den Körper angelegt und entfaltet werden können, indem sie die Säulen parallel zueinander entlang von Mantellinien einer Gruppe von virtuellen zylindrischen Oberflächen anordnen, wobei weiter Mittel zur Verarbeitung der Hydrophonsignale vorgesehen sind, um mindestens einen Sende- und/oder Empfangskanal (V₄) zu bilden, dadurch gekennzeichnet, daß die Arme (2) je zwei um einen Abstand kleiner als 1/4 der Betriebswellenlänge des Sonars getrennte Säulen (4, 7) tragen, daß die Verarbeitungsmittel außerdem Mittel aufweisen, um jedem Paar von Säulen auf jedem Arm eine im wesentlichen kardioide Richtwirkung beim Empfang und/oder beim Aussenden zu verleihen, die nach innen (200) oder nach außen (300) orientiert ist, und daß diese Mittel außerdem Auswahlmittel im Bereich der Kanalbildung zur Auswahl eines Teils der doppelten Säulenpaare aufweisen, deren Kardioide nach innen orientiert sind, und den anderen Teil der Paare von Doppelsäulen, deren Kardioiden nach außen orientiert sind, wodurch zwei Antennen simuliert werden, von denen die eine konkav und die andere konvex ist und die in Richtung jedes gebildeten Kanals orientiert sind, wobei alle Säulenpaare zur Bildung jedes Kanals verwendet werden.

2. Sonaranordnung nach Anspruch 1, dadurch gekennzeichnet, daß die Säulen (4, 7) in der entfalteten Stellung gleichmäßig über zwei zylindrische Oberflächen mit koaxialen Basiskreisen verteilt sind und daß die Verarbeitungsmittel für jeden gebildeten Kanal jeweils die Kardioiden auswählen, die auf der einen Seite einer Querschnittsebene des Zylinders senkrecht zur Richtung des Kanals (V₄) liegen, bzw. die Kardioiden auswählen, die auf der anderen Seite dieser Querschnittsebene liegen.

# FIG_1

# FIG_2

# FIG_3